# EUROPÄISCHE PATENTSCHRIFT

(11) **EP 2 144 838 B1**
(45) Veröffentlichungstag und Bekanntmachung des Hinweises auf die Patenterteilung: **16.02.2011**
(21) Anmeldenummer: 08717927.1
(22) Anmeldetag: 18.03.2008
(51) Int. Cl.: B66D 1/16, F16D 1/08

(54) **HEBEZEUG**
LIFTING GEAR
TREUIL

(30) Priorität: 27.03.2007 DE 102007014505
(43) Veröffentlichungstag der Anmeldung: 20.01.2010
(73) Patentinhaber: Demag Cranes & Components GmbH, 58300 Wetter (DE)
(72) Erfinder: KOHLENBERG, Thomas, 33102 Paderborn (DE); NOLL, Stefan, 51399 Burscheid (DE); BACKSMANN, Jürgen, 58119 Hagen (DE); PASSMANN, Christoph, 44287 Dortmund (DE); IMBUSCH, Gereon, 40822 Mettmann (DE)
(74) Vertreter: Moser & Götze
(86) Internationale Anmeldenummer: PCT/EP2008/053193
(87) Internationale Veröffentlichungsnummer: WO 2008/116783

(56) Entgegenhaltungen:
- DE-A1- 19 742 142
- DE-U1- 29 816 675
- US-A- 3 386 549
- US-A- 5 855 451

## Beschreibung

Die Erfindung betrifft ein Hebezeug mit einer Antriebseinheit, einer von der Antriebseinheit antreibbaren Antriebswelle mit daran festlegbarem Antriebsflansch sowie einer mit dem Antriebsflansch über eine Kupplung verbindbaren Seiltrommel, wobei die Kupplung aus mindestens einem zur Drehmomentübertragung jeweils in eine Ausnehmung in dem Antriebsflansch und in eine Bohrung in der Seiltrommel eingreifenden Kupplungselement besteht. Ein derartiges Hebezeug wird in der US-A-3 386 549 offenbart.

Als Seilzüge ausgebildete Hebezeuge weisen eine im Wesentlichen zylindrische Seiltrommel auf, die in einem Rahmen drehbar gelagert ist. Die Seiltrommel wird mit Hilfe eines Getriebemotors angetrieben, wobei die Ausgangswelle des Getriebes drehfest mit der Seiltrommel gekuppelt ist. Um Herstellungstoleranzen, Fluchtungsfehler und Verformungen der in der Regel mit einer sogenannten "3-Punkt-Lagerung" ausgestatteten Seiltrommel auszugleichen, die zu Verspannungen im Antrieb führen können, ist es aus der Praxis bekannt, zwischen der Ausgangswelle und der Seiltrommel eine Kupplung anzuordnen, die diese Fluchtungsfehler aufnehmen kann.

Die DE 298 16 675 U1 offenbart eine Kupplung für Hubwerke zur Übertragung des Momentes einer angetriebenen Getriebewelle auf eine Seiltrommel, mit einer auf einem Ende der Getriebewelle angeordneten Kupplungsnabe sowie mit einem über innere und äußere Deckel verschlossenen, auf der Kupplungsnabe angeordneten Kupplungsgehäuse. In das Kupplungsgehäuse und die Kupplungsnabe sind zylinderförmige und gegenüberliegend angeordnete Aussparungen angeordnet, in die formschlüssig Tonnenrollen zur Kraftübertragung von dem Kupplungsgehäuse zu der Kupplungsnabe angeordnet sind.

Davon ausgehend liegt der Erfindung die Aufgabe zugrunde, ein Hebezeug mit einer aus einem Motor und einem Getriebe bestehenden Antriebseinheit mit einer Kupplung auszustatten, die bei einfachem und Platz sparendem Aufbau eine einfache Montage gewährleistet.

Diese Aufgabe wird durch ein Hebezeug mit einer aus einem Motor und einem Getriebe bestehenden Antriebseinheit mit den Merkmalen des Anspruchs 1 gelöst. Vorteilhafte Ausgestaltungen der Erfindung sind in den Unteransprüchen 2 bis 7 angegeben.

Erfindungsgemäß wird bei einem Hebezeug mit einer Antriebseinheit, einer von der Antriebseinheit antreibbaren Antriebswelle mit daran festlegbarem Antriebsflansch sowie einer mit dem Antriebsflansch über eine Kupplung verbindbaren Seiltrommel, wobei die Kupplung aus mindestens einem zur Drehmomentübertragung jeweils in eine Ausnehmung in dem Antriebsflansch und in eine Bohrung in der Seiltrommel eingreifenden Kupplungselement besteht, ein einfacher und Platz sparender Aufbau sowie eine einfache Montage dadurch erreicht, dass das Kupplungselement aus einer Montagestellung radial bewegbar und in der Betriebsstellung festlegbar ist, in der das Kupplungselement antriebsmäßig den Antriebsflansch mit der Seiltrommel miteinander verbindet. Diese Verschiebebewegung des Kupplungselementes erlaubt ein besonders einfaches formschlüssiges Verbinden der zu kuppelnden Bauteilen. Die Kupplung ist besonders einfach aufgebaut und kostengünstig. Das Kupplungselement erlaubt weiterhin bei der Montage, zunächst den Antriebsflansch mit der Antriebswelle zu verbinden und dann die Seiltrommel über den Antriebsflansch zu schieben und dort mit dem Kupplungselement zu verbinden. Das Kupplungselement ist besonders leicht von außen und in Radialrichtung erreichbar. Die gesamte Montage kann somit einfach und kostengünstig erfolgen. Auch ist eine Demontage der Seiltrommel durch Lösen der Kupplungselemente einfach möglich.

Eine kompakte Bauweise wird dadurch erreicht, dass in der Montagestellung das Kupplungselement sich vollständig in der Ausnehmung des Antriebsflansches befindet.

Ein besonders gesicherter Betriebszustand und eine Verliersicherung des Kupplungselements sind dadurch gegeben, dass in der Betriebsstellung das Kupplungselement von der Seiltrommel selbst in der Ausnehmung gehalten wird. Hierbei liegt erfindungsgemäß in der Betriebsstellung der Absatz an der Innenfläche der Seiltrommel an. Dies ist insbesondere zur Unfallvermeidung wichtig bei Hebezeugen, die normaler Wiese über den Bedienern angeordnet sind.

Erfindungsgemäß ist vorgesehen, dass das Kupplungselement aus einem trommelseitigen, äußeren Mitnehmernocken und einem sich daran anschließenden flanschseitigen, inneren Mitnehmernocken besteht, der äußere Mitnehmernocken einen Außendurchmesser aufweist, der kleiner als ein Außendurchmesser des inneren Mitnehmernockens und das Kupplungselement einen Absatz im Bereich des Übergangs zwischen dem inneren Mitnehmernocken und dem äußeren Mitnehmernocken aufweist.

Besonders einfach kann das Kupplungselement aus der Montagestellung radial nach außen in die Betriebsstellung bewegt werden, wenn das Kupplungselement als Hülse mit einem zentralen und radial ausgerichteten Kanal ausgebildet ist, in den eine Schraube zur Verstellung der Hülse eindrehbar ist. Die Verstellung kann somit leicht von außen und in Radialrichtung erfolgen, aus der die Kupplung leicht zugänglich ist. Anstatt der Schraube können auch andere Sicherungselemente zum Einsatz kommen.

Eine einfache Art der Sicherung des Kupplungselements in der Betriebsstellung wird dadurch erreicht, dass in der Betriebsstellung die Schraube sich mit ihrer Spitze an einem Grund der sacklochartig ausgebildeten Ausnehmung des Antriebsflansches abstützt.

Die Baugröße der Kupplung wird dadurch gering gehalten, dass in der Betriebsstellung die Schraube mit ihrem Kopf nur leicht, vorzugsweise weniger als die Seilführung beziehungsweise als der Wanddicke der Seiltrommel von der Oberfläche der Seiltrommel hervorragt.

Eine günstige und gleichmäßige Drehmomentübertragung wird dadurch erreicht, dass mehrere, vorzugsweise drei, Kupplungselemente verteilt entlang des Umfangs des Antriebsflansches angeordnet sind. Vorzugsweise sind drei Kupplungselemente vorgesehen, wodurch die Bauteilanzahl und auch die Kosten gering gehalten werden können bei gleichzeitig sicherer Drehmomentübertragung.

An Hand der zugehörigen Zeichnung, in der ein Ausführungsbeispiel eines erfindungsgemäßen Hebezeugs nur beispielhaft dargestellt ist, wir die Erfindung näher erläutert. In der Zeichnung zeigt:
- Figur 1: einen Längsschnitt durch den schematischen Aufbau eines Hebezeugs;
- Figur 2: einen Schnitt durch den Kupplungsbereich eines erfindungsgemäßen Hebezeugs und
- Figur 3: eine Stirnansicht auf die Seiltrommel mit dem Antriebflansch teilweise im Schnitt.

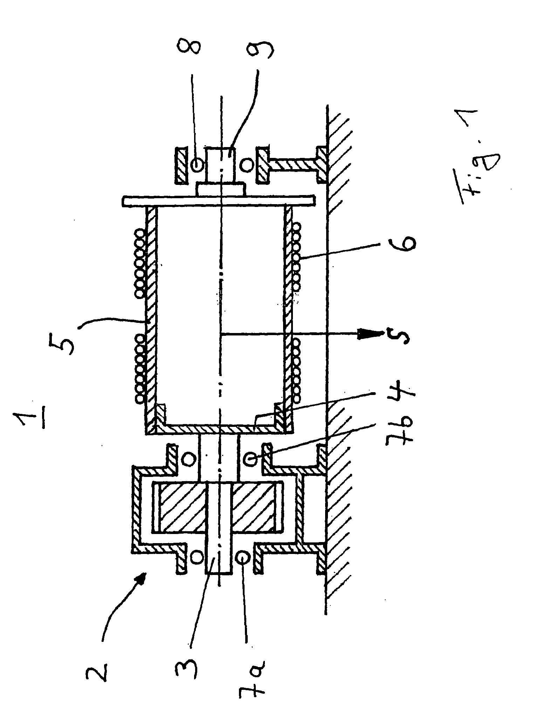

Die Figur 1 zeigt schematisch den Aufbau eines als Seilzug ausgebildeten Hebezeugs 1. Das Hebezeug 1 umfasst im Wesentlichen eine aus einem Motor und einem Getriebe bestehende Antriebseinheit 2, eine von der Antriebseinheit 2 angetriebene Antriebswelle 3 mit einem daran festgelegten Antriebsflansch 4 sowie eine mit dem Antriebsflansch 4 drehfest verbundene Seiltrommel 5, auf die beziehungsweise von der ein nur angedeutetes Seil 6 aufwickelbar beziehungsweise abwickelbar ist. Hierbei weist der tellerförmige Antriebsflansch 4 einen Außendurchmesser auf, der kleiner ist als der Innendurchmesser der Seiltrommel 5 in ihrem Endbereich, und ist seitlich in die Seiltrommel 5 bündig einschoben.

Wie aus der Figur 1 ersichtlich, ist die Seiltrommel 5 mit einer sogenannten "3-Punkt-Lagerung" ausgestattet, bei der die Seiltrommel 5 über zwei Lager 7a, 7b auf der Seite der Antriebswelle 3 und über ein Lager 8 auf der Seite eines der Antriebswelle 3 gegenüberliegenden Trommelzapfens 9 gelagert ist. Auch ist es möglich, die Seiltrommel 5 direkt über ein Lager abzustützen, dessen Außenring an der Innenseite der Seiltrommel 5 anliegt.

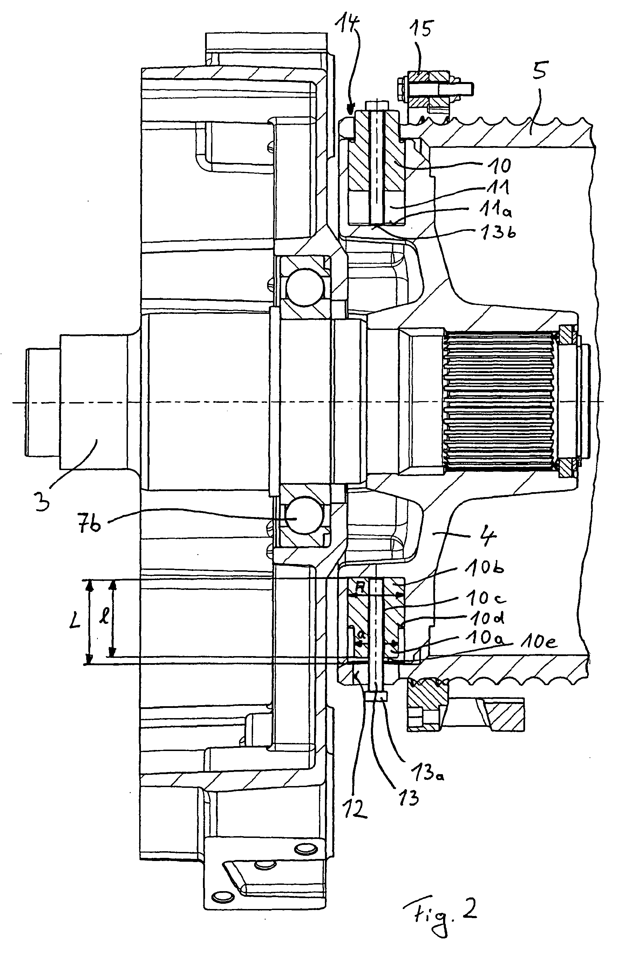

Da in der Praxis diese Lager 7a, 7b und 8 bedingt durch Fertigungs- und Aufstelltoleranzen sowie Verformungen unter Last nicht immer exakt auf einer Linie fluchtend anzuordnen sind, kommt es zu Zwängungsspannungen der gelagerten Bauteile, nämlich in der Antriebswelle 3 und/oder im Antriebsflansch 4 der Seiltrommel 5. Um diese unerwünschten und schlecht berechenbaren Beanspruchungen zu vermeiden, die zusätzlich zu einer als Seilzugkraft S wirkenden Nutzlast auftreten, ist eine Kupplung vorgesehen, die winkel- und längenausgleichend das Drehmoment der Antriebswelle 3 auf die Seiltrommel 5 überträgt, wie dies in Figur 2 dargestellt ist.

Die Figur 2 zeigt einen Schnitt durch den Kupplungsbereich eines erfindungsgemäßen Hebezeugs 1. Die Kupplung ist zwischen dem Antriebsflansch 4 und der Seiltrommel 5 angeordnet, während der Antriebsflansch 4 seinerseits verdrehfest mit der Antriebswelle 3 verbunden ist. Selbstverständlich ist es auch möglich, eine Kupplung zwischen der Antriebswelle 3 und dem Antriebsflansch 4 anzuordnen, wobei es in diesem Fall notwendig ist, dass der Antriebsflansch 4 verdrehfest mit der Seiltrommel 5 verbunden ist. Als dritte Ausgestaltungsform der Kupplung besteht die Möglichkeit, die Drehmomentübertragung sowohl von der Antriebswelle 3 auf den Antriebsflansch 4 als auch vom mittels einer Kupplung zu bewerkstelligen.

Wie aus der Figur 2 ersichtlich, besteht die Kupplung aus mindestens einem Kupplungselement 10, das in einer Ausnehmung 11 des Antriebsflansches 4 ruht. Durch den gewählten winkligen Schnitt sind zwei Kupplungselemente 10 dargestellt. Das obere Kupplungselement 10 befindet sich in einer Befestigungsstellung und ist formschlüssig zwischen dem miteinander zu kuppelnden Antriebsflansch 4 und der Seiltrommel 5 angeordnet. Demgegenüber befindet sich das untere Kupplungselement 10 in einer Ruhestellung, in der es sich vollständig in der Ausnehmung 11 des Antriebsflansches 4 befindet, und somit den Antriebsflansch 4 und die Seiltrommel 5 nicht miteinander kuppelt.

Jedes Kupplungselement 10 ist hülsenförmig und weist beidendig radial nach außen und innen weisende Mitnahmenocken 10a, 10b auf, die zur Übertragung des Drehmoments in entsprechende Ausnehmungen 11 des Antriebsflansches 4 sowie Bohrungen 12 der Seiltrommel 5 eingreifen.

Da die Kupplungselemente 10 durch das zwischen dem Antriebsflansch 4 und der Seiltrommel 5 übertragene Drehmoment einer starken Scherbeanspruchung ausgesetzt sind, sind die Kupplungselemente 10 aus Stahl.

In der Figur 2 ist auch gezeigt, dass das Kupplungselement 10 hülsenförmig ausgebildet ist und im Wesentlichen aus dem äußeren Mitnahmenocken 10a, dem inneren Mitnahmenocken 10b und einem zentralen Kanal 10c besteht, der durch das gesamte Kupplungselement 10 und somit dem äußeren Mitnahmenocken 10a und dem inneren Mitnahmenocken 10b verläuft. Der äußere Mitnahmenocken 10a ist ringförmig und weist einen geringeren Außendurchmesser a als der ebenfalls ringförmig ausgebildete innere Mitnahmenocken 10b auf mit seinem Außendurchmesser A. Hierdurch erhält das Kupplungselement 10 eine gestufte Außenform mit einem ringförmigen und ebenen Absatz 10d im Bereich des Übergangs von dem inneren Mitnahmenocken 10b zu dem äußeren Mitnahmenocken 10a. Der zentrale Kanal 10 c weist an seinem inneren Ende ein Innengewinde für die Schraube 13 auf. Die Schraube 13 stützt sich mit ihrem Kopf 13a auf einer äußeren ringförmige Anlagefläche 10e des äußere Mitnahmenocken 10a auf. Im Befestigungszustand befindet sich diese Anlagefläche 10e im Bereich der äußeren Oberfläche der Seiltrommel 5 und ragt nur gering hervor. Der Kopf 13a der Schraube 13 ragt nicht weiter als die Dicke der Seiltrommel 5 hervor, auf jeden Fall nicht weiter als eine auf der Seiltrommel 5 angeordnete ringförmige Seilführung 15.

In der Figur 2 ist das obere Kupplungselement 10 in seiner Betriebsstellung dargestellt, in der das Kupplungselement 10 in eine Anschlagstellung in der Aussparung 11 nach außen geschoben ist. In der zugehörigen Montagestellung befindet sich am Anfang keine Schraube 13 in dem mit einem Innengewinde versehenen Kanal 10c und das Kupplungselement 10 ruht nach innen verschoben auf dem Grund 11a der sacklochartigen und zylinderförmigen Aussparung 11, deren Innendurchmesser geringfügig größer ist, um ein Verschieben in Längsrichtung des Kupplungselements 10 zu ermöglichen aber gleichzeitig die Drehmomentübertragung zu gewährleisten. Vorzugsweise kommt hier eine Übergangspassung zu Einsatz. Die Länge I des Kupplungselements 10 ist geringer als oder gleich wie die Länge L der Aussparung 11, damit in der Montagestellung des Kupplungselements 10 der äußere Mitnahmenocken 10a nicht aus der Aussparung 11 und somit den Außenumfang des Antriebsflansches 4 herausragt. Somit kann in der Montagestellung des Kupplungselements 10 im Rahmen der Montage des Hebezeugs 1 die Seiltrommel 3 auf den Antriebsflansch 4 geschoben werden. Hierbei werden die Bohrungen 12 in der Seiltrommel 5 zu den äußeren Mitnahmenocken 10a der Kupplungselemente 10 ausgerichtet, so dass anschließend zur Befestigung der Seiltrommel 4 an dem Antriebsflansch 4 die Schraube 13 in den Kanal 10c eingeschraubt werden kann, bis die Spitze 13b der Schraube 13 auf den Grund 11 a der Aussparung trifft. Eine weitere Drehung der Schraube 13 bewirkt, dass die Spitze 13b der Schraube 13 sich an dem Grund 11a abstützt und das Kupplungselement 10 sich mit seinem äußeren Mitnahmenocken 10a aus dem Antriebsflansch 4 nach außen heraus bewegt und in die Bohrung 12 der Seiltrommel 4 eintritt, bis am Ende der Absatz 10d an der Innenfläche 5a der Seiltrommel 5 anliegt. Auch ist an dem äußeren Mitnahmenocken 10a ein Ansatz für ein Werkzeug vorgesehen, um das Kupplungselement 10 beim Anziehen der Schraube 13 zu kontern. Die entsprechenden Werkzeuge und Ansätze sind handelsüblicher Natur, beispielsweise eine Sechskantfläche. In der Betriebsstellung ragt der Ansatz aus der Seiltrommel 5 hervor. Das Drehmoment wird somit direkt von dem Antriebsflansch 4 über das Kupplungselement 10 auf die Seiltrommel 4 übertragen. Die Schraube 13 sichert das Kupplungselement 10 nur in seiner Betriebsstellung und liegt nicht im Kraftfluss der Drehmomentübertragung. Es hat sich gezeigt, dass die Betriebskräfte das Kupplungselement 10 in der Betriebsstellung halten.

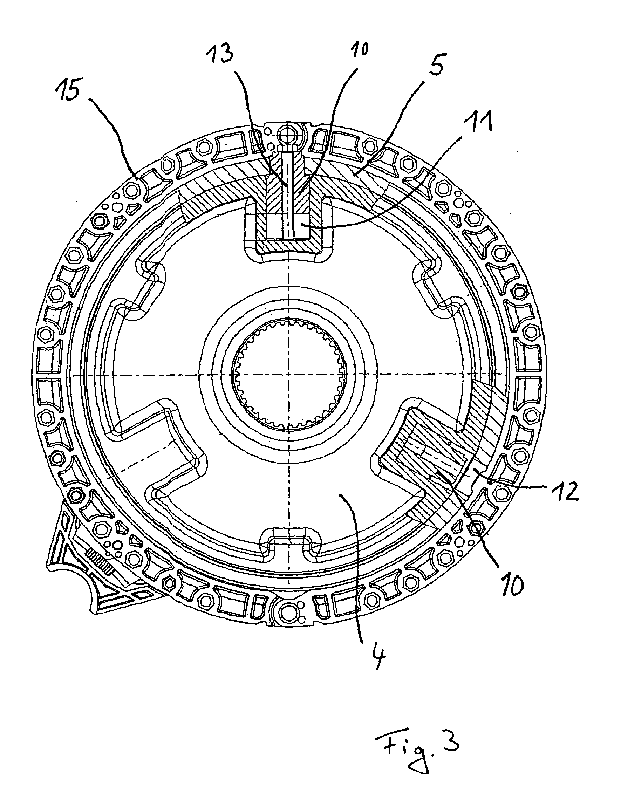

Um einen Längsversatz zwischen der Seiltrommel 5 und dem Antriebsflansch 4 ausgleichen zu können, sind bei dem dargestellten Ausführungsbeispiel die Bohrungen 12 zur Aufnahme der äußeren Mitnahmenocken 10a mit einem größerem Durchmesser aus der Außenumfang der äußeren Mitnahmenocken 10a ausgebildet und somit in Axial- und Radialrichtung der Seiltrommel 5 größer ausgebildet als die entsprechenden, aufzunehmenden Mitnahmenocken 10a. Ein auf Grund dieser Ausbildung entstehender Spalt 14, der im Bereich von etwa 0,2 bis 1,0mm liegt, vorzugsweise 0,8mm ist, ist der Figur 3 zu entnehmen.

Die Figur 2 zeigt, wie ein Winkelversatz zwischen den Längsachsen der Seiltrommel 5 und dem Antriebsflansch 4 und/oder der Antriebswelle 3 ausgeglichen werden kann. Zu diesem Zweck ist der Antriebsflansch 4 beziehungsweise die Innenseite der Seiltrommel 5 gewölbt.

Eine solchermaßen ausgebildete Kupplung zeichnet sich dadurch aus, dass sie einfach aufgebaut ist und bei kleiner Baugröße einen guten Ausgleich auftretender Fertigungs- und Aufstellungstoleranzen ermöglicht. Auch können hohe Drehmomente übertragen werden.

In der Figur 3 ist eine Stirnansicht auf die Seiltrommel 5 mit dem Antriebflansch 5 teilweise im Schnitt dargestellt und somit ersichtlich, dass auf dem Umfang gleichmäßig verteilt drei Bohrungen 12, drei Ausnehmungen 11 und drei Kupplungselemente 10 vorgesehen sind. Hierdurch wird eine hinreichende Stabilität erreicht.

### Bezugszeichenliste

- 1: Hebezeug
- 2: Antriebseinheit
- 3: Antriebswelle
- 4: Antriebsflansch
- 4a: Anlagefläche
- 5: Seiltrommel
- 5a: Innenfläche
- 6: Seil
- 7a: Lager
- 7b: Lager
- 8: Lager
- 9: Trommelzapfen
- 10: Kupplungselement
- 10a: äußerer Mitnahmenocken
- 10b: innerer Mitnahmenocken
- 10c: Kanal
- 10d: Absatz
- 10e: Anlagefläche
- 11: Ausnehmung
- 11a: Grund
- 12: Bohrung
- 13: Schraube
- 13a: Kopf
- 13b: Spitze
- 14: Spalt
- 15: Seilführung

- a: Außendurchmesser
- I: Länge
- A: Außendurchmesser
- L: Länge
- S: Seilzugkraft

## Patentansprüche

1. Hebezeug mit einer Antriebseinheit (2), einer von der Antriebseinheit (2) antreibbaren Antriebswelle (3) mit daran festlegbarem Antriebsflansch (4) sowie einer mit dem Antriebsflansch (4) über eine Kupplung verbindbaren Seiltrommel (5), wobei die Kupplung aus mindestens einem zur Drehmomentübertragung jeweils in eine Ausnehmung (11) in dem Antriebsflansch (4) und in eine Bohrung (12) in der Seiltrommel (5) eingreifenden Kupplungselement (10) besteht, **dadurch gekennzeichnet, dass** das Kupplungselement (10) aus einer Montagestellung radial in eine Betriebsstellung verschiebbar und festlegbar ist, in der das Kupplungselement (10) antriebsmäßig den Antriebsflansch (4) mit der Seiltrommel (5) miteinander verbindet, dass das Kupplungselement (10) aus einem äußeren Mitnehmernocken (10a) und einem sich daran anschließenden inneren Mitnehmernocken (10a) besteht, der äußere Mitnehmernocken (10a) einen Außendurchmesser (a) aufweist, der kleiner als ein Außendurchmesser (A) des inneren Mitnehmernockens (10a) und das Kupplungselement (10) einen Absatz (10d) im Bereich des Übergangs zwischen dem inneren Mitnehmernocken (10a) und dem äußeren Mitnehmernocken (10a) aufweist sowie in der Betriebsstellung der Absatz (10e) an der Innenfläche (5a) der Seiltrommel (5) anliegt.

2. Hebezeug nach Anspruch 1, **dadurch gekennzeichnet, dass** in der Montagestellung das Kupplungselement (10) sich vollständig in der Ausnehmung (11) befindet.

3. Hebezeug nach Anspruch 1 oder 2, **dadurch gekennzeichnet, dass** in der Betriebsstellung das Kupplungselement (10) von der Seiltrommel (5) in der Ausnehmung (11) gehalten ist.

4. Hebezeug nach einem der Ansprüche 1 bis 3, **dadurch gekennzeichnet, dass** das Kupplungselement (10) als Hülse mit einem zentralen und radial ausgerichteten Kanal (10c) ausgebildet ist, in den Kanal (10c) eine Schraube (13) eindrehbar ist, über die das Kupplungselement (10) aus der Montagestellung radial nach außen in die Betriebsstellung bewegbar ist.

5. Hebezeug nach Anspruch 4, **dadurch gekennzeichnet, dass** in der Betriebsstellung die Schraube (13) sich mit ihrer Spitze (12b) an einem Grund (11a) der sacklochartig ausgebildeten Ausnehmung (11) abstützt.

6. Hebezeug nach Anspruch 4 oder 5, **dadurch gekennzeichnet, dass** in der Betriebsstellung die Schraube (13) mit ihrem Kopf (13a) weniger als eine Seilführung (15) beziehungsweise weniger als eine Wanddicke der Seiltrommel (5) von der Oberfläche der Seiltrommel (5) hervorragt.

7. Hebezeug nach einem der Ansprüche 1 bis 6, **dadurch gekennzeichnet, dass** mehrere, vorzugsweise drei, Kupplungselemente (10) verteilt entlang des Umfangs des Antriebsflansches (4) angeordnet sind.

## Claims

1. Hoist having a drive unit (2), having a drive shaft (3) which is able to be driven by the drive unit (2) and which has a driving flange (4) able to be fixed to it, and having a cable drum (5) able to be connected to the driving flange (4) by a coupling, the coupling comprising at least one coupling member (10) which, to transmit torque, engages in a recess (11) in the driving flange (4) and in a bore (12) in the cable drum (5), **characterised in that** the coupling member (10) can be displaced radially from a position for assembly to an operating position and can be locked, in which operating position the coupling member (10) connects the driving flange (4) to the cable drum (5) for driving purposes, **in that** the coupling member (10) comprises an outer entrainment portion (10a) and an inner entrainment portion (10a) which connects up therewith, the outside diameter (a) of the outer entrainment portion (10a) is smaller than the outside diameter (A) of the inner entrainment portion (10a), and the coupling member (10) has a step (10d) in the region of the transition between the inner entrainment portion (10a) and the outer entrainment portion (10a) and the step (10e) rests against the inner surface (5a) of the cable drum (5) in the operating position.

2. Hoist according to claim 1, **characterised in that** in the position for assembly the whole of the coupling member (10) is situated in the recess (11).

3. Hoist according to claim 1 or 2, **characterised in that** in the operating position the coupling member (10) is held in the recess (11) by the cable drum (5).

4. Hoist according to one of claims 1 to 3, **characterised in that** the coupling member (10) takes the form of a sleeve containing a central, radially orientated passage (10c), and a screw or bolt (13) by means of which the coupling member (10) can be moved outwards radially from the position for assembly to the operating position can be screwed into the passage (10c).

5. Hoist according to claim 4, **characterised in that** in the operating position the screw or bolt (13) is supported by its tip (12b) on a floor (11a) of the recess (11), which latter takes the form of a blind hole.

6. Hoist according to claim 4 or 5, **characterised in that** in the operating position the head (13a) of the screw or bolt (13) projects from the surface of the cable drum (5) less than a cable guide (15) or by less than a wall-thickness of the cable drum (5).

7. Hoist according to one of claims 1 to 6, **characterised in that** a plurality of coupling members (10), and preferably three, are arranged in a distributed manner around the circumference of the driving flange (4).

## Revendications

1. Treuil de levage comportant une unité d'entraînement (2), un arbre d'entraînement (3), pouvant être entraîné par l'unité d'entraînement (2) et auquel peut être fixé un flasque d'entraînement (4), ainsi qu'un tambour à câble (5) pouvant être relié au flasque d'entraînement (4) par un accouplement, l'accouplement étant constitué d'au moins un élément d'accouplement (10) qui s'engage à chaque fois dans un évidement (11) ménagé dans le flasque d'entraînement (4) et dans un perçage (12) ménagé dans le tambour à câble (5) afin de transmettre le couple de rotation, **caractérisé en ce que** l'élément d'accouplement (10) peut être déplacé radialement d'une position de montage dans une position de fonctionnement et immobilisé, position de fonctionnement dans laquelle l'élément d'accouplement (10) relie en entraînement le flasque d'entraînement (4) au tambour à câble (5), **en ce que** l'élément d'accouplement (10) est constitué d'une came d'entraînement extérieure (10a) et d'une came d'entraînement intérieure (10a) se raccordant à ladite came d'entraînement extérieure, la came d'entraînement extérieure (10a) ayant un diamètre extérieur (a) qui est inférieur à un diamètre extérieur (A) de la came d'entraînement intérieure (10a) et l'élément d'accouplement (10) possédant un talon (10d) dans la région de la transition entre la came d'entraînement intérieure (10a) et la came d'entraînement extérieure (10a) et, dans la position de fonctionnement, le talon (10e) portant contre la surface intérieure (5a) du tambour à câble (5).

2. Treuil de levage selon la revendication 1, **caractérisé en ce que** dans la position de montage l'élément d'accouplement (10) se trouve entièrement dans l'évidement (11).

3. Treuil de levage selon la revendication 1 ou 2, **caractérisé en ce que** dans la position de fonctionnement l'élément d'accouplement (10) est maintenu dans l'évidement (11) par le treuil à câble (5).

4. Treuil de levage selon l'une des revendications 1 à 3, **caractérisé en ce que** l'élément d'accouplement (10) est conformé en manchon doté d'un canal central (10c) orienté radialement, une vis (13) est vissée dans le canal (10c), ladite vis permet de déplacer l'élément d'accouplement (10) radialement vers l'extérieur de la position de montage dans la position de fonctionnement.

5. Treuil de levage selon la revendication 4, **caractérisé en ce que** dans la position de fonctionnement la vis (13) s'appuie avec sa pointe (12b) sur un fond (11a) de l'évidement (11) conformé en trou oblong.

6. Treuil de levage selon la revendication 4 ou 5, **caractérisé en ce que** dans la position de fonctionnement la vis (13) fait saillie avec sa tête (13a) de la surface du tambour à câble (5) moins qu'un guide de câble (15) ou moins qu'une épaisseur de paroi du tambour à câble (5).

7. Treuil de levage selon l'une des revendications 1 à 6, **caractérisé en ce que** plusieurs, avantageusement trois, éléments d'accouplement (10) sont disposés de façon répartie sur la périphérie du flasque d'entraînement (4).
